# EUROPÄISCHE PATENTSCHRIFT

(11) **EP 2 622 251 B1**
(45) Veröffentlichungstag und Bekanntmachung des Hinweises auf die Patenterteilung: **14.05.2014**
(21) Anmeldenummer: 11813653.0
(22) Anmeldetag: 05.09.2011
(51) Int. Cl.: F16L 13/00, F16L 13/10, F16L 13/14, F16L 23/024, B23P 11/00, B29C 65/00, B29C 65/48, B29C 65/56

(54) **FÖRDERROHR SOWIE VERFAHREN ZUR HERSTELLUNG EINES FÖRDERROHRS**
CONVEYING PIPE AND METHOD FOR PRODUCING A CONVEYING PIPE
TUYAU DE TRANSPORT ET PROCÉDÉ DE FABRICATION D'UN TUYAU DE TRANSPORT

(30) Priorität: 27.09.2010 DE 102010046542
(43) Veröffentlichungstag der Anmeldung: 07.08.2013
(73) Patentinhaber: Putzmeister Engineering GmbH, 72631 Aichtal (DE)
(72) Erfinder: MÄCKLE, Raimund, 73730 Esslingen (DE); WESTERMANN, Karl, 72141 Walddorfhässlach (DE)
(74) Vertreter: Griepenstroh, Jörg
(86) Internationale Anmeldenummer: PCT/DE2011/001683
(87) Internationale Veröffentlichungsnummer: WO 2012/048673

(56) Entgegenhaltungen:
- EP-A1- 0 618 040
- DE-A1- 19 649 414
- DE-A1-102007 013 126
- GB-A- 2 455 565
- US-A1- 2006 118 327

## Beschreibung

Die vorliegende Erfindung betrifft ein Förderrohr für den Feststofftransport gemäß dem Oberbegriff des Patentanspruchs 1. Ein solches Förderrohr ist bekannt aus der DE 10 2007 013 126 A1. Die vorliegende Erfindung betrifift weiterhin ein Verfahren zur Herstellung eines Förderrohrs gemäß Patentanspruch 8.

Die Förderung von Feststoffen, beispielsweise von Baustoffen, Beton, Kies oder Sand, erfolgt pneumatisch oder hydraulisch in Rohrsträngen, welche aus mehreren miteinander verbundenen Förderrohren zusammengesetzt sind. Feststoffe können im Rahmen dieser Erfindung aber auch Stoffe sein, die in einer Fluidform vorliegen. Hierunter sind beispielsweise Betongemische oder aber Klärschlammgemische zu verstehen.

Für die Koppelung der Förderrohre sind diese jeweils endseitig mit Flanschen bzw. Rohrbunden versehen. Über die Rohrbunde erfolgt die Verbindung der Förderrohre entweder durch Kupplungsschellen oder aber auch durch Bolzen bei mit Bohrungen versehenen Rohrbunden.

Bei den in der Praxis fast ausschließlich zum Einsatz kommenden Förderrohren sind die Rohrbunde mit den Rohrkörpern verschweißt. Der Wärmeeinfluss beim Schweißvorgang kann aber nachteilige Gefügeveränderungen an den Förderrohren im Verbindungsbereich hervorrufen.

Eine weitere Ausführungsform ist das Aufkleben des Rohrbundes. Durch die DE 196 07 871 C1 zählt ein Förderrohr zum Stand der Technik, bei dem die Rohrbunde mit der äußeren Oberfläche des Rohrendes vollflächig verklebt sind. Hierdurch wird ein Wärmeeinfluss durch thermisches Fügen vermieden. In der Praxis kommt es jedoch immer wieder zu Problemen der Dauerhaltbarkeit solcher geklebten Koppelungen. Darüber hinaus kann es bei hohen Drücken oder aber Vibrationen im Bereich der Klebestellen auch zu Undichtigkeiten oder sogar zu einem plötzlichen Versagen der Verbindungsstelle kommen.

Ursächlich hierfür sind insbesondere Toleranzunterschiede zwischen den Rohrbunden sowie eine nicht immer gleichbleibende Qualität der Klebeverbindung.

Schadhafte Förderrohre müssen ausgetauscht werden, was zur Folge hat, dass eine Unterbrechung des Förderbetriebs herbeigeführt wird.

Der Erfindung liegt daher die Aufgabe zugrunde, ein Förderrohr bereit zu stellen, das eine gegenüber dem Stand der Technik kostengünstige und einfach ausführbare Verbindung gleichbleibender Qualität zwischen einem Rohrbund und dem Förderrohr aufweist, bei gleichzeitiger hoher Produktionsgenauigkeit.

Die zuvor genannte Aufgabe wird mit einem Förderrohr gemäß Patentanspruch 1 gelöst.

Die Aufgabe wird weiterhin mit einem Verfahren zur Herstellung eines Förderrohrs gemäß Patentanspruch 8 gelöst.

Vorteilhafte Ausführungsformen der vorliegenden Erfindung sind Bestandteil der abhängigen Patentansprüche.

Das erfindungsgemäße Förderrohr für den Feststofftransport, aufweisend einen Rohrkörper mit einem an mindestens einem Ende verbundenen Rohrbund, ist dadurch gekennzeichnet, dass der Rohrbund und das Rohrende zumindest abschnittsweise in einem in Längsrichtung des Rohres orientierten Koppelungsbereich durch eine Übermaßpassung miteinander gekoppelt sind. Die Wandstärke des Rohrbundes wird dabei im Koppelungsbereich kleiner oder gleich der Wandstärke des Rohrendes gewählt.

Der Rohrbund selber ist dabei im Koppelungsbereich dehnbar ausgebildet. Dies bedeutet, dass durch das Koppeln von dem Rohrende mit dem Rohrbund eine Übermaßpassung entsteht. Die Übermaßpassung entsteht infolge einer Ausdehnung bzw. Weitung des Rohrbundes.

Die Rohrbundinnenfläche und/oder Rohrendmantelfläche weist im Koppelungsbereich zumindest bereichsweise eine Rauigkeit zwischen 20 und 70 µm, besonders bevorzugt zwischen 30 und 60 µm und insbesondere zwischen 40 und 50 µm auf. Im Rahmen der Erfindung ist unter der Rauigkeit die Rautiefe der Oberfläche zu verstehen. Durch eine abrasive Behandlung der Oberfläche, beispielsweise durch Schmirgeln, Strahlen oder ähnlichen Anrauungsverfahren, entsteht eine Oberfläche, die Krater und Vertiefungen aufweist. Bezogen auf die höchsten Punkte der Oberfläche erstrecken sich die Krater und Vertiefungen in dem zuvor genannten Toleranzbereich in radialer Richtung.

Zwischen der Rohrbundinnenfläche und der Rohrendmantelfläche ist im Koppelungsbereich ein anaerob aushärtender Klebstoff angeordnet. Dies bietet den Vorteil, dass zusätzlich zur kraftschlüssigen Verbindung der Übermaßpassung eine klebstofftechnische Verbindung zwischen Rohrbundinnenfläche und Rohrendmantelfläche ausgebildet ist. Der Klebstoff ist dabei erfindungsgemäß in den Kratern und Vertiefungen angeordnet, die durch die zuvor genannte Rauigkeit ausgebildet sind. Durch die Krater und/oder Vertiefungen ist somit ein Klebespalt zur Anordnung des anaerob aushärtenden Klebstoffes gegeben. Der Klebstoff innerhalb des Klebespaltes ist aufgrund des mindestens Nullmaßes des Klebespaltes immer von der Atmosphäre abgeschottet. Durch einen anaerob aushärtenden Klebstoff ist sichergestellt, dass der Klebstoff aushärtet und seine Klebkraft entfaltet, auch wenn er im Koppelungsbereich aufgrund der Übermaßpassung keinen Kontakt zur Atmosphäre hat.

Weiterhin ermöglicht die Kombination des Klebens mit einer kraftschlüssigen Verbindung eine deutlich bessere Dauerhaltbarkeit und Dichtigkeit gegenüber konventionellen Klebeverbindungen. Insbesondere können Mehrlagenrohre aus metallischen oder aber auch anderen Werkstoffen, beispielsweise Verbundwerkstoffen oder ähnlichem, mit einem Rohrbund besonders dauerhaltbar und dicht gekoppelt werden. Im Rahmen der Erfindung können einoder mehrlagige Rohrkörper mit einem Rohrbund gekoppelt werden.

Besonders vorteilig hierbei ist, dass während des Aushärteprozesses der klebetechnischen Verbindung die Bauteile nicht verrutschen können.

In einer bevorzugten Ausführungsvariante ist die Wandstärke des Rohrbundes im Koppelungsbereich dabei kleiner oder gleich der Wandstärke des Rohrendes gewählt.

Die Wandstärke des Rohrbundes wird im Koppelungsbereich idealerweise gerade so dünn gewählt, dass die Erfordernisse der Betriebsdruckfestigkeit des späteren Rohres erfüllt werden. Die Wandstärke ist im Koppelungsbereich also immer kleiner und/oder gleich der Wandstärke des Rohrendes. Bei einem Mehrlagenrohr bezieht sich die Wandstärke auf das außenliegende Rohr des Rohrendes. Aufgrund der geringeren Wandstärke des Rohrbundes weitet sich beim Aufpressen der Rohrbund ohne Auswirkungen auf die geometrischen Abmessungen des Rohrendes. Somit wird innerhalb der Toleranzgrenzen der Übermaßpassung stets eine Übermaßpassung sichergestellt, ohne den Innendurchmesser des Rohrendes zu beeinflussen. Hierdurch wird eine Beschädigung der Rohrenden vermieden.

Auch kann im Rahmen der Erfindung der Werkstoff des Rohrbundes eine geringere Festigkeit bzw. Härte gegenüber dem Werkstoff des Rohrendes aufweisen. Auch diese Werkstoffeigenschaften führen zu einem Aufweiten bzw. Drehen des Rohrbundes. Insbesondere bei der Werkstoffwahl des Rohrbundes ist es möglich, mit der erfindungsgemäß hergestellten Verbindung eines Endes eines Förderrohrs mit einem Rohrbund, ein Mehrlagenrohr mit einem dehnbaren Rohrbund zu koppeln.

Besonders vorteilig ist es auch im Rahmen der Erfindung, einen Rohrbund zu wählen, der eine Kombination aus den zuvor genannten Merkmalen aufweist. Der Rohrbund weist in dieser Ausführungsvariante idealerweise eine kleinere oder aber gleichgroße Wandstärke gegenüber dem Rohrbund auf und gleichzeitig ist er aus einem weicheren bzw. duktileren Werkstoff gegenüber dem Rohrende gefertigt. Hierdurch wird sichergestellt, dass die Übermaßpassung durch ein Aufweiten des Rohrbundes hergestellt ist. Ein Schrumpfen bzw. Kontrahieren des Rohrendes wird dadurch weitestgehend vermieden.

Durch die Übermaßpassung in Kombination mit einem Aufweiten des Rohrbundes werden ungewollte Aufhärtungen oder Härteverbindungen im Bereich der Wärmeeinflusszone in Folge eines thermischen Fügens vermieden. Hierdurch werden ungewollte Aufhärtungen oder Härteverminderungen im Bereich der Wärmeeinflusszone vermieden.

Unter einer Übermaßpassung ist im Rahmen der Erfindung eine Passung zu verstehen, bei der das Größtmaß des Durchgangs durch den Rohrbund in jedem Fall kleiner gleich dem Kleinstaußendurchmesser des Rohres entspricht. Es entsteht somit aufgrund von Fertigungstoleranzen im Bereich der Übermaßpassung mindestens immer ein Nullspalt. Der Außendurchmesser des Rohres ist folglich immer größer gleich dem Innendurchmesser des Rohrbundes. Vorzugsweise ist die Übermaßpassung im Wesentlichen über die gesamte Länge des Koppelungsbereiches zwischen der Rohrbundinnenfläche und der Rohrendmantelfläche ausgebildet. Besonders bevorzugt weist der Koppelungsbereich eine Länge in Längsrichtung des Rohres zwischen 0,01 und 30 cm, besonders bevorzugt zwischen 0,1 und 20 cm und insbesondere zwischen 0,5 und 10 cm auf.

Im Koppelungsbereich wird der Innendurchmesser des Bundes so gewählt, dass selbst bei Ausnutzung der Durchmessertoleranzen von Rohrbundinnenfläche und der Rohrendmantelfläche in jedem Fall eine Übermaßpassung entsteht. Unter Berücksichtigung der Fertigungstoleranzen des Rohrendes und des Rohrbundes ist mit einer über die gesamte Länge des Koppelungsbereiches ausgebildeten Übermaßpassung aus fertigungstechnischer Sicht immer ein fester Sitz des Rohrbundes garantiert.

Vorzugsweise ist am Rohrbund eine Einlaufschräge ausgebildet. Durch die Einlaufschräge wird beim relativen Verpressen von Rohrbund mit dem Rohrende sichergestellt, dass sich das Rohr koaxial zum Rohrbund ausrichtet. Diese Ausrichtung erfolgt in Form einer Eigenzentrierung. Ein weiterer sich ergebender Vorteil besteht darin, dass aufgetragener Klebstoff, der sich auf der Rohrbundinnenfläche und/oder Rohrendmantelfläche befindet, während des Verpressvorgangs aufgrund der Übermaßpassung abgeschert wird, jedoch durch die Einlaufschräge auf den relativ in den Rohrbund einfahrenden Bereich des Rohrendes immer wieder erneut aufgetragen wird. Eine während des Einpressvorgangs besonders gute Verteilung des aufzutragenden Klebstofffilms wird somit durch die Einlaufschräge sichergestellt.

In einer weiteren bevorzugten Ausführungsform weist der Rohrbund eine Anschlagfläche auf. Ein Anschlag im Inneren des Klebebundes begrenzt den Aufpressweg und vereinfacht so die Einhaltung einer gewünschten Rohrlänge. Ein weiterer sich ergebender Vorteil ist, dass durch Anschlagflächen weitere Bauteile, wie z.B. Schleißringe, mit in die Verbindung eingebracht werden können.

Das erfindungsgemäße Verfahren zur Herstellung eines Förderrohrs zum Feststofftransport nach einem der Ansprüche 1 bis 7 weist folgende Verfahrensschritte auf:
- Bereitstellung eines Rohrkörpers und eines Rohrbundes,
- Anrauen der Rohrbundinnenfläche und/oder Rohrmantelaußenfläche im Koppelungsbereich zu einer Rauhtiefe zwischen 20 und 70 µm,
- Säubern der Rohrbundinnenfläche und/oder Rohrmantelaußenfläche,
- Auftragen eines anerob aushärtenden Klebstoffes auf die Rohrbundinnenfläche und/oder die Rohrendmantelfläche im Koppelungsbereich,
- Aufpressen des Rohrbundes auf das Rohrende im Koppelungsbereich und/oder Einpressen des Rohrendes in den Rohrbund im Koppelungsbereich.

Durch das erfindungsgemäße Verfahren wird eine besonders unkompliziert herzustellende Verbindung zwischen einem Rohrbund mit einem Rohrende bereitgestellt. Die Verbindung zeichnet sich insbesondere durch eine kostengünstige Herstellbarkeit gepaart mit hoher Rohrproduktionsgenauigkeit sowie hoher Dauerhaltbarkeit und sehr guten Dichtigkeitseigenschaften aus.

Unter einem Anrauen ist im Rahmen der Erfindung die Behandlung einer Oberfläche mit abrasiven Mitteln zu verstehen. Beispielsweise seien an dieser Stelle das Schmirgeln oder aber das Strahlen, beispielsweise Sandstrahlen, Glasperlstrahlen, Korundstrahlen oder Eisstrahlen, zur Herstellung einer gewünschten Rauigkeit benannt. Im Rahmen der Erfindung ist es grundsätzlich möglich, die einzelnen Verfahrensschritte nur an einer der zuvor genannten Flächen auszuführen oder aber in Kombination an beiden Flächen. Die Auswahl, ob jeweils nur eine Oberfläche oder aber beide Oberflächen behandelt werden, hängt von den an die Dichtigkeit und die Haltbarkeit gestellten Anforderungen des herzustellenden Förderrohres sowie von den eingesetzten Werkstoffen ab.

Ein weiterer sich ergebender Vorteil des erfindungsgemäßen Verfahrens zur Koppelung eines Rohrbundes mit einem Förderrohr sowie ein weiterer sich ergebender Vorteil des hergestellten Förderrohres ist, dass sowohl der Rohrbund als auch das Förderrohr werkstofftechnisch verschiedene Materialien aufweisen können. Beispielsweise ist die Koppelung eines Metallrohrbundes mit einem Verbundwerkstoffrohrkörper möglich. Es ist aber in Rahmen der Erfindung auch möglich, ein Metallrohrbund mit einem Metallrohrkörper zu koppeln. Weitere einsetzbare Werkstoffe sind beispielsweise gummiartige Werkstoffe, Leichtmetallwerkstoffe oder aber sonstige Kunststoffe oder Verbundwerkstoffe.

Das Säubern ist im Rahmen der Erfindung als Säubern der angerauten Oberfläche zu verstehen. Hierbei kann es um ein mechanisches Säubern, beispielsweise das Entfernen von Spänen mittels Druckluft, oder aber ein chemisches Säubern, beispielsweise das Abspülen oder Abwaschen der zu behandelnden Oberfläche mit einem speziellen Reiniger, handeln. Das Säubern wirkt sich positiv auf die Hafteigenschaft der Oberfläche mit dem Klebstoff aus.

Der anaerob aushärtende Klebstoff wird auf die Rohrbundinnenfläche und/oder Rohrendmantelfläche aufgetragen. Die klebetechnische Verbindung wirkt sich im Zusammenspiel mit der kraftschlüssigen Verbindung des aufgepressten Rohrbundes besonders vorteilig auf die Dichtigkeit und die Langlebigkeit der hergestellten Rohrverbindung aus.

Im Rahmen der Erfindung ist unter dem Verpressen zu verstehen, dass der Rohrbund auf das Rohrende aufgepresst wird. Im Rahmen der Erfindung ist aber auch weiterhin zu verstehen, dass das Rohrende in den Rohrbund eingepresst wird. Es kann natürlich auch im Rahmen der Erfindung eine Kombination von Aufpressen und Einpressen stattfinden. Abhängig ist dies maßgeblich von der Dimensionierung der zu verpressenden Bauteile oder der Werkstoffauswahl. Weiterhin ist unter dem Verpressen im Rahmen der Erfindung das Herstellen einer Übermaßpassung zwischen Rohrbund und Rohrende zu verstehen. Die Übermaßpassung kann dabei in dem aus der Fertigungstechnik für die Übermaßpassung bekannten Toleranzfeld liegen.

In einer weiteren bevorzugten Ausführungsvariante wird zeitlich vor, während und/oder nach dem Säubern die Oberfläche mit einem Aktivator behandelt. Unter einem Aktivator ist im Rahmen der Erfindung eine chemische oder aber physikalische Behandlung der Oberfläche zu verstehen. Eine chemische Behandlung kann beispielsweise durch einen chemischen Zusatzstoff erfolgen, der die Oberfläche der Rohrbundinnenfläche oder aber der Rohrmantelaußenfläche besonders empfänglich für den angewendeten Klebstoff macht. Unter einem physikalischen Aktivieren ist beispielsweise eine Wärmebehandlung zu verstehen, die ebenfalls die jeweilige Oberfläche besonders empfänglich für einen guten Kontakt mit dem Klebstoff vorbereitet.

In einer weiteren bevorzugten Ausführungsvariante wird beim Verpressen von Rohrbund und Rohrende eine Eigenjustage durch die Einlaufschräge durchgeführt. Die sich aus der Einlaufschräge am Rohrbund ergebenden Vorteile gelten für diesen Verfahrensschritt analog. Im Rahmen der Erfindung ist auch eine Einlaufschräge am Rohrende vorstellbar. Diese wird als Fase am außenseitigen Ende des Rohres ausgebildet. Die zuvor genannten Vorteile gelten analog.

In einer besonders bevorzugten Ausführungsvariante des erfindungsgemäßen Verfahrens wird die Einpresskraft und/oder Aufpresskraft in Abhängigkeit der Toleranz der Übermaßpassung gesteuert. Vor dem Verpressen genügt eine grobe Zentrierung von Rohrbund und Rohrkörper. Über die Einlaufschräge richtet sich der Rohrbund beim Verpressen selbst koaxial zum Rohrende aus. Die Aufpressvorrichtung muss im Rahmen der Erfindung so gestaltet sein, dass sie diese Eigenjustage des Bundes zulässt und gleichzeitig eine große Toleranz unterbindet.

Die nötige Presskraft hängt stark von der Bund- bzw. Rohrgeometrie und von dem toleranzbehafteten Übermaß der Passung zwischen dem Rohrbund und dem Rohrende ab. Grundsätzlich muss die Presskraft so groß gewählt sein, dass ein sicherer Ablauf des kontinuierlich durchzuführenden Pressvorgangs gewährleistet ist. Sie sollte aber nicht zu groß sein, um Schäden am Anschlag oder am Rohrende zu vermeiden. Abhängig von den jeweiligen Produktionstoleranzen der Übermaßpassung ist so die Kraft zum Verpressen von Rohrbund und Rohrende variabel steuerbar, um beispielsweise bei einem hohen Übermaß eine hohe Presskraft aufzubringen und in Relation dazu bei einer geringen Übermaßpassung eine geringere Presskraft aufzubringen.

Der anaerob aushärtende Klebstoff wird auf die Rohrbundinnenfläche und/oder Rohrendmantelfläche aufgetragen. Die klebetechnische Verbindung wirkt sich im Zusammenspiel mit der kraftschlüssigen Verbindung des aufgepressten Rohrbundes besonders vorteilig auf die Dichtigkeit und die Langlebigkeit der hergestellten Rohrverbindung aus.

Weitere Vorteile, Merkmale, Eigenschaften und Aspekte der vorliegenden Erfindung ergeben sich aus der folgenden Beschreibung. Bevorzugte Ausführungsformen sind in den schematischen Zeichnungen dargestellt. Diese dienen dem einfachen Verständnis der Erfindung. Es zeigen:
- Figur 1: zeigt eine perspektivische Schnittansicht eines erfindungsgemäßen Rohrendes.
- Figur 2: zeigt einen Längsschnitt durch einen erfindungsgemäßen Rohrbund mit angedeutetem Rohrkörper.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

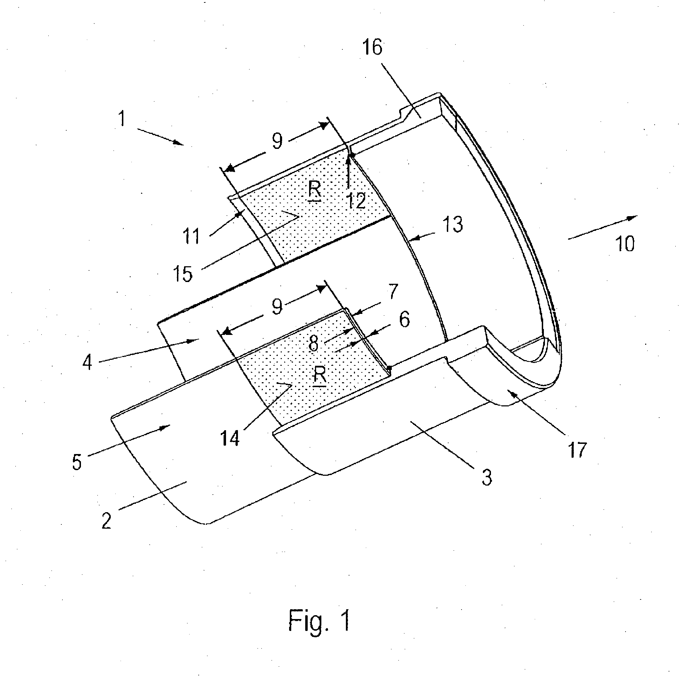

Figur 1 zeigt einen Ausschnitt eines Förderrohrs 1 bestehend aus einem mehrlagigen Rohrkörper 2 mit einem an dem Ende des Rohrkörpers 2 gekoppelten Rohrbund 3. Der mehrlagige Rohrkörper 2 besteht dabei aus einem Innenrohr 4 und einem Außenrohr 5. Der Rohrkörper 2 weist eine Gesamtwandstärke 6 sowie eine Wandstärke 7 des Innenrohrs 4 und eine Wandstärke 8 des Außenrohrs 5 auf. Auf dem Rohrende 1 ist mittels Übermaß in einem Koppelungsbereich 9, der sich in Längsachse 10 des Förderrohrs 2 erstreckt, ein Rohrbund 3 verpresst.

Auf die Bildebene bezogen auf der linken Seite des Rohrbunds 3 ist eine Einlaufschräge 11 ausgebildet. Auf der rechten Seite des Koppelungsbereichs 9 ist dieser in dem Rohrbund 3 durch einen Anschlag 12 begrenzt. Das Rohrende 1 stößt mit seiner Stirnfläche 13 an den Anschlag 12 des Rohrbunds 3. Im Koppelungsbereich 9 ist zwischen der Rohrendmantelfläche 14 und der Rohrbundinnenfläche 15 ein hier nicht näher dargestellter anaerob aushärtender Klebstoff angeordnet.

Die Rohrendmantelfläche 14 und auch die Rohrbundinnenfläche 15 weisen im Koppelungsbereich 9 eine Rauhtiefe R auf. In dem Rohrbund 3 befindet sich auf der dem Ende des Rohrkörpers 2 gegenüberliegenden Seite des Anschlags 12 ein Schleißring 16. Der Rohrbund 3 ist im hier dargestellten Beispiel mit einem Kuppelungsbund 17 zur Koppelung mit einem weiteren Förderrohr per Kupplungsschelle versehen. Es ist aber auch vorstellbar, dass der Rohrbund 3 andere Koppelungsmöglichkeiten aufweist.

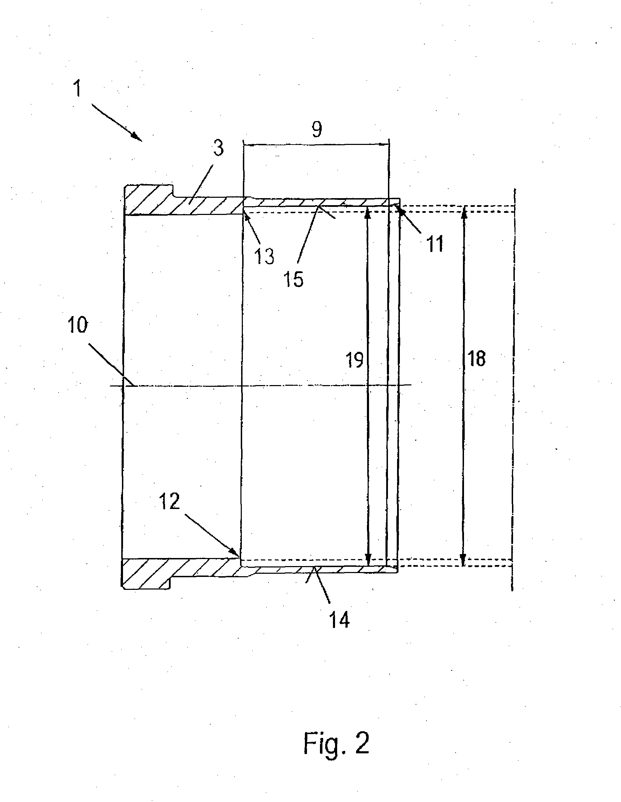

Figur 2 zeigt ein Rohrbund 3 und, gestrichelt dargestellt, ein Ende eines einlagigen Förderrohrs 1 in einer Längsschnittansicht. Hierdurch ist noch einmal deutlich zu erkennen, dass das Ende des Förderrohrs 1 mit seiner Stirnfläche 13 an den Anschlag 12 des Rohrbundes 3 grenzt. Zwischen dem zwischen dem Anschlag 12 und der Einlaufschräge 11 begrenzten Koppelungsbereich 9 weist die Rohrendmantelfläche 14 einen größeren Durchmesser 18 als der Durchmesser 19 der Rohrbundinnenfläche 15 auf.

### Bezugszeichen:

1 - Förderrohr
2 - Rohrkörper
3 - Rohrbund
4 - Innenrohr
5 - Außenrohr
6 - Wandstärke zu 2
7 - Wandstärke zu 4
8 - Wandstärke zu 5
9 - Koppelungsbereich
10 - Längsachse
11 - Einlaufschräge
12 - Anschlag
13 - Stirnfläche
14 - Rohrendmantelfläche
15 - Rohrbundinnenfläche
16 - Schleißring
17 - Kupplungsbund
18- Durchmesser zu 14
19 - Durchmesser zu 16
R - Rauhtiefe

## Patentansprüche

1. Förderrohr (1) für den Feststofftransport, aufweisend einen Rohrkörper (2) mit einem an mindestens einem Ende verbundenen Rohrbund (3), wobei der Rohrbund (3) und der Rohrkörper (2) zumindest abschnittsweise in einem in Längsrichtung des Rohrkörpers (2) orientierten Koppelungsbereich (9) durch eine Übermaßpassung miteinander gekoppelt sind, wobei der Rohrbund (3) im Koppelungsbereich (9) dehnbar ausgebildet ist, **dadurch gekennzeichnet, dass** die Rohrbundinnenfläche (15) und/oder Rohrendmantelfläche (14) im Koppelungsbereich (9) zumindest bereichsweise eine Rauhtiefe (R) zwischen 20 und 70 µm, besonders bevorzugt zwischen 30 und 60 µm und insbesondere zwischen 40 und 50 µm aufweist, wobei zwischen der Rohrbundinnenfläche (15) und der Rohrendmantelfläche (14) im Koppelungsbereich (9) ein anaerob aushärtender Klebstoff angeordnet ist.

2. Förderrohr nach Anspruch 1, **dadurch gekennzeichnet, dass** eine Wandstärke des Rohrbundes (3) im Koppelungsbereich (9) kleiner oder gleich der Wandstärke des Rohrendes ist.

3. Förderrohr nach Anspruch 1 oder 2, **dadurch gekennzeichnet, dass**
der Werkstoff des Rohrbundes (3) eine geringere Festigkeit und/oder 2
Härte gegenüber dem Werkstoff des Rohrendes (2) aufweist.

4. Förderrohr nach einem der Ansprüche 1 bis 3, **dadurch gekennzeichnet, dass** die Übermaßpassung im Wesentlichen über die gesamte Länge des Koppelungsbereiches (9) zwischen der Rohrbundinnenfläche (15) und der Rohrendmantelfläche (14) ausgebildet ist.

5. Förderrohr nach einem der Ansprüche 1 bis 4, **dadurch gekennzeichnet, dass** der Koppelungsbereich (9) eine Länge zwischen 0,01 und 30 cm, besonders bevorzugt zwischen 0,1 und 20 cm und insbesondere zwischen 0,5 und 10 cm aufweist.

6. Förderrohr nach einem der Ansprüche 1 bis 5, **dadurch gekennzeichnet, dass** am Rohrbund (3) eine Einlaufschräge (11) ausgebildet ist.

7. Förderrohr nach einem der Ansprüche 1 bis 6, **dadurch gekennzeichnet, dass** der Rohrbund (3) eine Anschlagfläche (12) aufweist.

8. Verfahren zur Herstellung eines Förderrohrs (1) zum Feststofftransport nach einem der Ansprüche 1 bis 7, aufweisend folgende Verfahrensschritte:
- Bereitstellen eines Rohrkörpers (2) und eines Rohrbundes (3),
- Anrauen der Rohrbundinnenfläche (15) und/oder Rohrendmantelfläche (14) im Koppelungsbereich (9) zu einer Rauhtiefe (R) zwischen 20 und 70 µm,
- Säubern der Rohrbundinnenfläche (15) und/oder Rohrendmantelfläche (14),
- Auftragen eines anaerob aushärtenden Klebstoffes auf die Rohrbundinnenfläche (15) und/oder die Rohrendmantelfläche (14) im Koppelungsbereich (9),
- Aufpressen des Rohrbundes (3) auf das Rohrende (1) im Koppelungsbereich (9) und/oder Einpressen des Endes des Rohrkörpers (2) in den Rohrbund (3) im Koppelungsbereich (9).

9. Verfahren nach Anspruch 8, **dadurch gekennzeichnet, dass** zeitlich vor, während und/oder nach dem Säubern die Oberflächen (14, 15) mit einem Aktivator behandelt werden.

10. Verfahren nach Anspruch 8 oder 9, **dadurch gekennzeichnet, dass** beim Verpressen von Rohrbund (3) und Rohrende (1) eine Eigenjustage durch die Einlaufschräge (11) durchgeführt wird.

11. Verfahren nach einem der Ansprüche 8 bis 10, **dadurch gekennzeichnet, dass** die Einpresskraft und/oder Aufpresskraft in Abhängigkeit der Toleranz der Übermaßpassung gesteuert wird.

## Claims

1. Conveying pipe (1) for transporting solids, comprising a pipe body (2) having a pipe flange (3) connected to at least one end, the pipe flange (3) and the pipe body (2) being coupled to one another at least in parts in a coupling region (9) oriented in the longitudinal direction of the pipe body (2) by an interference fit, the pipe flange (3) being embodied to be expandable in the coupling region (9), **characterised in that** the pipe flange inner surface (15) and/or the pipe end outer surface (14) has or have a peak-to-valley height (R) in the coupling region (9), at least in parts, of between 20 and 70 µm, particularly preferably between 30 and 60 µm and in particular between 40 and 50 µm, an anaerobically curing adhesive being disposed between the pipe flange inner surface (15) and the pipe end outer surface (14) in the coupling region (9).

2. Conveying pipe according to claim 1, **characterised in that** a wall thickness of the conveying tube (3) in the coupling region (9) is less than or equal to the wall thickness of the pipe end.

3. Conveying pipe according to claim 1 or 2, **characterised in that** the material of the pipe flange (3) has a lower strength and/or hardness than the material of the pipe end (2).

4. Conveying pipe according to one of claims 1 to 3, **characterised in that** the interference fit is formed substantially over the entire length of the coupling region (9) between the pipe flange inner surface (15) and the pipe end outer surface (14).

5. Conveying pipe according to one of claims 1 to 4, **characterised in that** the coupling region (9) has a length of between 0.01 and 30 cm, particularly preferably between 0.1 and 20 cm and in particular between 0.5 and 10 cm.

6. Conveying pipe according to one of claims 1 to 5, **characterised in that** an entry slope (11) is formed at the pipe flange (3).

7. Conveying pipe according to one of claims 1 to 6, **characterised in that** the pipe flange (3) has an abutment surface (12).

8. Method for producing a conveying pipe (1) for transporting solids according to one of claims 1 to 7, comprising the following steps:
- providing a pipe body (2) and a pipe flange (3),
- roughening the pipe flange inner surface (15) and/or pipe end outer surface (14) in the coupling region (9) to a peak-to-valley height (R) of between 20 and 70 µm,
- cleaning the pipe flange inner surface (15) and/or pipe end outer surface (14),
- applying an anaerobically curing adhesive to the pipe flange inner surface (15) and/or pipe end outer surface (14) in the coupling region (9),
- pressing the pipe flange (3) onto the pipe end (1) in the coupling region (9) and/or pressing the end of the pipe body (2) into the pipe flange (3) in the coupling region (9).

9. Method according to claim 8, **characterised in that** the surfaces (14, 15) are treated with an activator before, during and/or after the cleaning.

10. Method according to claim 8 or 9, **characterised in that** during the pressing together of the pipe flange (3) and pipe end (1) self-adjustment is carried out by the entry slope (11).

11. Method according to one of claims 8 to 10, **characterised in that** the pressing-in force and/or pressing-on force is controlled as a function of the tolerance of the interference fit.

## Revendications

1. Tuyau de transport (1) pour le transport de matériaux solides, comportant un corps de tuyau (2) avec un collier de tuyau (3) assemblé à au moins une extrémité, le collier de tuyau (3) et le corps de tuyau (2) étant couplés ensemble par emmanchement dur au moins par tronçons dans une zone de couplage (9) orientée dans le sens de la longueur du corps de tuyau (2) et le collier de tuyau (3) étant conçu extensible dans la zone de couplage (9), **caractérisé en ce que** la surface intérieure de collier de tuyau (15) et/ou la surface enveloppante d'extrémité de tuyau (14) a, au moins par zones dans la zone de couplage (9), une profondeur de rugosité (R) comprise entre 20 et 70 µm, notamment de préférence entre 30 et 60 µm et en particulier entre 40 et 50 µm, un adhésif durcissant en milieu anaérobie étant agencé entre la surface intérieure de collier de tuyau (15) et la surface enveloppante d'extrémité de tuyau (14) dans la zone de couplage (9).

2. Tuyau de transport selon la revendication 1, **caractérisé en ce qu'**une épaisseur de paroi du collier de tuyau (3) dans la zone de couplage (9) est inférieure ou égale à l'épaisseur de paroi de l'extrémité de tuyau.

3. Tuyau de transport selon la revendication 1 ou 2, **caractérisé en ce que** le matériau du collier de tuyau (3) présente une solidité et/ou dureté inférieure à celle du matériau de l'extrémité de tuyau (2).

4. Tuyau de transport selon l'une des revendications 1 à 3, **caractérisé en ce que** l'emmanchement dur est conçu globalement sur toute la longueur de la zone de couplage (9) entre la surface intérieure de collier de tuyau (15) et la surface enveloppante d'extrémité de tuyau (14).

5. Tuyau de transport selon l'une des revendications 1 à 4, **caractérisé en ce que** la zone de couplage (9) a une longueur comprise entre 0,01 et 30 cm, notamment de préférence entre 0,1 et 20 cm et en particulier entre 0,5 et 10 cm.

6. Tuyau de transport selon l'une des revendications 1 à 5, **caractérisé en ce qu'**un biseau d'introduction (11) est conçu sur le collier de tuyau (3).

7. Tuyau de transport selon l'une des revendications 1 à 6, **caractérisé en ce que** le collier de tuyau (3) comporte une surface de butée (12).

8. Procédé de fabrication d'un tuyau de transport (1) pour le transport de matériaux solides selon l'une des revendications 1 à 7, comportant les étapes suivantes :
- mettre à disposition un corps de tuyau (2) et un collier de tuyau (3),
- rendre rugueuse la surface intérieure de collier de tuyau (15) et/ou la surface enveloppante d'extrémité de tuyau (14) dans la zone de couplage (9) pour avoir une profondeur de rugosité (R) comprise entre 20 et 70 µm,
- nettoyer la surface intérieure de collier de tuyau (15) et/ou la surface enveloppante d'extrémité de tuyau (14),
- appliquer un adhésif durcissant en milieu anaérobie sur la surface intérieure de collier de tuyau (15) et/ou sur la surface enveloppante d'extrémité de tuyau (14) dans la zone de couplage (9),
- presser le collier de tuyau (3) sur l'extrémité de tuyau (1) dans la zone de couplage (9) et/ou presser l'extrémité du corps de tuyau (2) dans le collier de tuyau (3) dans la zone de couplage (9).

9. Procédé selon la revendication 8, **caractérisé en ce que** les surfaces (14, 15) sont traitées avec un activateur chronologiquement avant, pendant et/ou après le nettoyage.

10. Procédé selon la revendication 8 ou 9, **caractérisé en ce que**, lors du pressage du collier de tuyau (3) et de l'extrémité de tuyau (1), un auto-ajustage s'effectue grâce au biseau d'introduction (11).

11. Procédé selon l'une des revendications 8 à 10, **caractérisé en ce que** la force de pressage dedans et/ou dessus est commandée en fonction de la tolérance de l'emmanchement dur.
